(19) **Europäisches Patentamt**

**European Patent Office**

**Office européen des brevets**

(11) **EP 1 434 359 B1**

(12) **EUROPÄISCHE PATENTSCHRIFT**

(45) Veröffentlichungstag und Bekanntmachung des Hinweises auf die Patenterteilung:
**20.07.2005 Patentblatt 2005/29**

(51) Int Cl.⁷: **H04B 1/707**

(21) Anmeldenummer: **02406139.2**

(22) Anmeldetag: **24.12.2002**

(54) **Verfahren zur Erzeugung einer mit einem externen Signal synchronisierten Folge sowie Synchronisationsschaltung und Empfänger**

Method for generating a sequence synchronised with an external signal, synchronization circuit and receiver

Procédé pour la génération d'une séquence synchronisée avec un signal externe, circuit de synchronisation et récepteur

(84) Benannte Vertragsstaaten:
**AT BE BG CH CY CZ DE DK EE ES FI FR GB GR IE IT LI LU MC NL PT SE SI SK TR**

(43) Veröffentlichungstag der Anmeldung:
**30.06.2004 Patentblatt 2004/27**

(73) Patentinhaber: **U-Blox-AG**
**8800 Thalwil (CH)**

(72) Erfinder:
• **Kägi, Daniel**
**8630 Rüti (CH)**
• **Thiel, Andreas**
**8006 Zürich (CH)**
• **Mathis, Heinz**
**8713 Uerikon (CH)**

(74) Vertreter: **Wagner, Wolfgang H.**
**Zimmerli, Wagner & Partner AG,**
**Löwenstrasse 19,**
**Postfach**
**8021 Zürich (CH)**

(56) Entgegenhaltungen:
**WO-A-01/37441          US-A- 5 737 360**

• **VIGODA BENJAMIN: "A Nonlinear Dynamic System for Spread Spectrum Code Acquisition" MASTERS THESIS; MIT MEDIA LAB, [Online] 9. August 1999 (1999-08-09), Seiten 1-90, XP002167577 Boston, US Gefunden im Internet: <URL:www.media.mit.edu/physics/publicatio n s/theses/99.06.vigoda.pdf> [gefunden am 2001-05-16]**

EP 1 434 359 B1

**Beschreibung**

**Technisches Gebiet**

Die Erfindung betrifft ein Verfahren zur Erzeugung einer internen Folge von analogen Werten mit einer bestimmten Periode, welche einer in einem empfangenen Signal codierten externen Folge entspricht und mit ihr synchron ist, gemäss dem Oberbegriff des Anspruchs 1, ausserdem eine Synchronisationsschaltung zur Durchführung des Verfahrens und einen mindestens eine derartige Synchronisationsschaltung umfassenden Empfänger. Verfahren dieser Art dienen zur Decodierung von bestimmten Signalen in der Nachrichtentechnik, wie sie vor allem in der mobilen Telefonie und bei Ortungssystemen wie GPS eingesetzt werden.

**Stand der Technik**

In GPS-Empfängern, die im Folgenden als Beispiel herangezogen werden, müssen mehrere von Satelliten ausgesandte Signale den Satelliten zugeordnet und ihre Phasenlagen genau bestimmt werden, so dass die Laufzeiten und damit die Entfernung des Empfängers von den Satelliten ermittelt werden können. Den Signalen mit einer Trägerfrequenz von 1'575,42 MHz ist jeweils mittels Phasenmodulation ein digitales Signal aufgeprägt, das auf einer bestimmten, für den Satelliten kennzeichnenden Grundfolge von sogenannten Chips, einer Pseudozufallsfolge der Länge N=1'023 beruht. Die Uebertragungszeit der Grundfolge ist 1 ms, daher ist die Uebertragungszeit eines Chip der 1'023. Teil einer Millisekunde, also etwas weniger als 1 $\mu$s.

Der Satellit übermittelt auch digitale Daten, indem ein Datenbit jeweils mit 20 unmittelbar hintereinander gesendeten Exemplaren der Grundfolge verknüpft wird. Da die Uebermittlung der Grundfolge 1 ms dauert, erfolgt die Datenübertragung mit einer Rate von 50 bit/s. Das empfangene Signal besteht daher jeweils aus einer Folge von Wiederholungen der 20-fachen Grundfolge, wobei die 20-fache Grundfolge jeweils je nach Datenbit invertiert ist oder nicht. Die Grundfolge ist jeweils eine sogenannte Gold-Folge. Das Signal ist gewöhnlich sehr schwach und hat auf der Dezibel-Skala einen stark negativen Rauschabstand.

Zur Identifikation der Grundfolge und Feststellung der Phasenlage des empfangenen Signals wurden verschiedene Verfahren vorgeschlagen. So wird z.B., während aus dem empfangenen Signal in einer Hochfrequenzstufe eine externe Folge binärer Werte abgeleitet wird, jede der möglichen Grundfolgen lokal im Empfänger erzeugt und jeweils um verschiedene Intervalle verschobene Kopien davon mit der externen Folge korreliert. Dabei kann die Suche in allen Fällen, in denen keine Uebereinstimmung gefunden wird, erst nach Ueberprüfung sämtlicher möglicher Verschiebungen der Grundfolge abgebrochen werden. Wegen der verhältnismässig grossen Länge derselben ist dies ein zeitaufwendiges Verfahren, ausser es wird stark parallelisiert, was jedoch sowohl den Schaltungsaufwand und damit die Kosten des Empfängers als auch den Energieverbrauch in die Höhe treibt.

Gemäss einem anderen Verfahren (WO-A-02/25 829) wird ein Abschnitt der externen Folge Fourier-transformiert und mit der im Empfänger gespeicherten Fourier-Transformierten der Grundfolge multipliziert und das Resultat rücktransformiert. Dies entspricht einer Faltung des Abschnitts der externen Folge mit der Grundfolge, deren Werte jeweils den Korrelationen des Abschnitts mit dem um eine entsprechende Anzahl Chips zeitverschobenen Exemplar der Grundfolge entsprechen, so dass ihr Maximum die Phasenlage anzeigt. Auch dieses Verfahren erfordert jedoch einen beträchtlichen schaltungstechnischen Aufwand und führt zu einem verhältnismässig hohen Energieverbrauch im Empfänger.

Für sogenannte m-Folgen ist es auch bekannt (US-A-5 579 337, US-A-5 612 973, WO-A-01/37 441 oder "A Nonlinear Dynamic System for Spread Spectrum Code Acquisition", B. Vigoda, Thesis, MIT, USA, 1999), eine zu einer externen Folge synchrone interne Folge zu erzeugen, indem ein analoges rückgekoppeltes Schieberegister eingesetzt wird, dem jeweils ein Eingangswert zugeführt wird, der aus einer Ueberlagerung eines durch Verknüpfung älterer Werte erzeugten Rückkopplungswertes mit dem aktuellen Wert der externen Folge gewonnen wurde. Es hat sich jedoch gezeigt, dass sich dieses Verfahren nicht ohne weiteres auf andere Folgen wie z.B. Gold-Folgen anwenden lässt. Ausserdem versagen die bisher bekannt gewordenen Ausführungen des Verfahrens bei grossen negativen Rauschabständen, wie sie vor allem für GPS-Signale typisch sind.

**Darstellung der Erfindung**

Der Erfindung liegt die Aufgabe zu Grunde, ein gattungsgemässes Verfahren anzugeben, das mit verhältnismässig geringem schaltungstechnischem Aufwand und geringem Energieverbrauch eine rasche und zuverlässige Identifikation der Grundfolge und Feststellung der Phasenlage des externen Signals gestattet. Diese Aufgabe wird durch die Merkmale im kennzeichnenden Teil des Anspruchs 1 gelöst.

Ausserdem soll eine zur Durchführung des Verfahrens geeignete Synchronisationsschaltung angegeben werden sowie ein geeigneter Empfänger. Diese Aufgaben werden durch die Merkmale im Kennzeichen des Anspruchs 17 bzw. 20 gelöst.

## Kurze Beschreibung der Zeichnungen

Im folgenden wird die Erfindung anhand von Figuren, welche lediglich ein Ausführungsbeispiel darstellen, näher erläutert. Es zeigen

Fig. 1 im wesentlichen ein Hochfrequenzteil eines erfindungsgemässen Empfängers,

Fig. 2 ein Basisbandteil des besagten Empfängers,

Fig. 3 eine Komponente des Basisbandteils,

Fig. 4 eine erfindungsgemässe Synchronisationsschaltung,

Fig. 5 den Graphen einer im erfindungsgemässen Verfahren verwendeten Rückkopplungsfunktion,

Fig. 6 einen Ausschnitt aus einer Gold-Folge, wie sie im Signal eines GPS-Satelliten codiert ist,

Fig. 7 vergrössert einen Ausschnitt aus der Gold-Folge von Fig. 6,

Fig. 8 einen dem Ausschnitt von Fig. 6 entsprechenden Ausschnitt des Signals am Ende des Hochfrequenzteils,

Fig.9, 10 dem Ausschnitt von Fig. 6 entsprechende Ausschnitte des Signals an bestimmten Punkten des Basisbandteils,

Fig. 11a-c, 12a-c dem Ausschnitt von Fig. 6 entsprechende Ausschnitte des Signals an weiteren Punkten des Basisbandteils und

Fig. 13 die Entwicklung der Leistung eines Rückkopplungssignals im Basisbandteil während einer Synchronisation.

## Wege zur Ausführung der Erfindung

Das erfindungsgemässe Verfahren sowie die Synchronisationsschaltung zu ihrer Ausführung und der Empfänger werden im folgenden am Beispiel eines GPS-Empfängers dargestellt. Verfahren, Synchronisationsschaltung und Empfänger eignen sich jedoch für alle Anwendungen, bei denen Daten CDMAcodiert übertragen werden und die benutzte Grundfolge von binären Werten die Eigenschaft hat, dass sie durch Verknüpfung zweier erzeugender Binärfolgen herstellbar ist, von denen mindestens die eine eine m-Folge ist oder doch die Eigenschaft hat, dass sie durch ein binäres rückgekoppeltes Schieberegister erzeugbar ist und die Phasenlage von Abschnitten der Länge des Schieberegisters in der Grundfolge eindeutig bestimmbar ist. Neben Gold-Folgen erfüllen Kasami-Folgen und andere, wie sie der Literatur entnehmbar sind, diese Bedingung. Für weitere Beispiele s. z.B. J. D. Olsen: Nonlinear binary sequences with asymptotically optimum periodic cross-correlation (Dissertation University of California 1977). Auch die nachfolgend beschriebenen Vorrichtungen sind, allenfalls mit unbedeutenden Anpassungen, in einem über das GPS-System weit hinausgehenden Einsatzbereich verwendbar.
Beim GPS-System kommen, wie erwähnt, Gold-Folgen zum Einsatz. Sie können durch binäre Verknüpfung zweier sogenannter bevorzugter Paare von m-Folgen hergestellt werden. Jede m-Folge kann durch ein binäres rückgekoppeltes Schieberegister der Länge n erzeugt werden und hat u.a. die Eigenschaft, dass mit einer Ausnahme jede Folge einer Länge n - im vorliegenden Fall ist n=10 - genau ein Mal in der m-Folge der Länge $N=2^n-1$ - hier 1'023 - vorkommt, d.h. die Position eines solchen Abschnitts in der m-Folge eindeutig bestimmbar ist.
Für die binären Grössen und ihre Verknüpfung sind verschiedene Darstellungen möglich. Am geläufigsten ist die Darstellung durch 0 und 1 mit der Addition modulo 2 (auch Exklusiv-Oder-Verknüpfung) $(b_1,b_2) \rightarrow b_1 \oplus b_2$ als sowohl assoziativer als auch kommutativer Verknüpfung, gemäss der folgenden Tabelle:

| $b_2 \backslash b_1$ | 0 | 1 |
|---|---|---|
| 0 | 0 | 1 |

(fortgesetzt)

| $b_2 \backslash b_1$ | 0 | 1 |
|---|---|---|
| 1 | 1 | 0 |

Die Verknüpfung eines Elements mit dem Nullelement 0 lässt das erstere unverändert, während die Verknüpfung mit 1 jeweils 0 in 1 und 1 in 0 überführt. Da stets $b \oplus b = 0$ ist, hat die Verknüpfung auch die Eigenschaft, dass

$$(1) \quad (b_1 \oplus b_2) \oplus b_2 = b_1 \oplus 0 = b_1$$

gilt, d.h. die Verknüpfung des Resultates der Verknüpfung zweier Ausgangselemente mit einem der Ausgangselemente ergibt das andere Ausgangselement.

Durch die Transformation

$$(2) \quad b \rightarrow p = 2b-1$$

gelangt man zu folgender Darstellung, die äquivalent, aber leichter implementierbar ist und mit der im Ausführungsbeispiel gearbeitet wird:

| $p_2 \backslash p_1$ | -1 | 1 |
|---|---|---|
| - 1 | -1 | 1 |
| 1 | 1 | -1 |

Hier wird die Verknüpfung durch die Abbildung

$$(3) \quad (p_1, p_2) \rightarrow p_1 \otimes p_2 = -p_1 \cdot p_2$$

hergestellt. -1 ist das Nullelement. Die Verknüpfung lässt sich offensichtlich ohne weiteres auf beliebige reelle Zahlen, d.h. analoge Werte ausdehnen.

Jede m-Folge $p_1, ..., p_N$ mit $N = 2^n - 1$ kann hergestellt werden, indem, ausgehend von einer Ausgangsfolge $p_1, ..., p_n$ der Länge n, welche nicht ausschliesslich aus Nullelementen besteht, rekursiv weitere Werte gebildet werden nach dem Muster:

$$(4) \quad p_i = p_{i-n} \otimes p_{i-rm} \otimes ... \otimes p_{i-r1},$$

wobei $0 < r_1 < ... r_m < n$ gilt und das Polynom $x^n + x^{rm} + ... + x^{r1} + 1$ bezüglich der oben definierten Arithmetik prim ist. Z.B. kann jeweils

$$(5) \quad p_i = p_{i-10} \otimes p_{i-3}$$

gelten. Da alle N möglichen Abschnitte der Länge n ausser dem nur aus Nullelementen bestehenden durchlaufen werden, bevor die Ausgangsfolge wiederkehrt, kommt es auf die Wahl der letzteren nicht weiter an.

Zur Bildung einer Gold-Folge $s_1, ..., s_N$ werden zwei m-Folgen $p_1, ..., p_N$ und $q_1, ..., q_N$, die ein sogenanntes bevorzugtes Paar von m-Folgen bilden, als erzeugende Folgen für die Gold-Folge herangezogen, d.h. die Gold-Folge wird aus diesen Folgen durch gliedweise Verknüpfung hergestellt:

$$(6) \quad s_i = p_i \otimes q_i$$

Kasami-Folgen werden ebenfalls durch gliedweise Verknüpfung aus zwei erzeugenden Folgen hergestellt, von denen die eine eine m-Folge ist. Für die Eigenschaften von m-Folgen, Gold-Folgen, Kasami-Folgen usw. wird auf die Literatur verwiesen, z.B. E. H. Dinan, B. Jabbari: Spreading Codes for Direct Sequence CDMA and Wideband CDMA Cellular Networks, IEEE Communications Magazine 9/1998, S. 48-54.

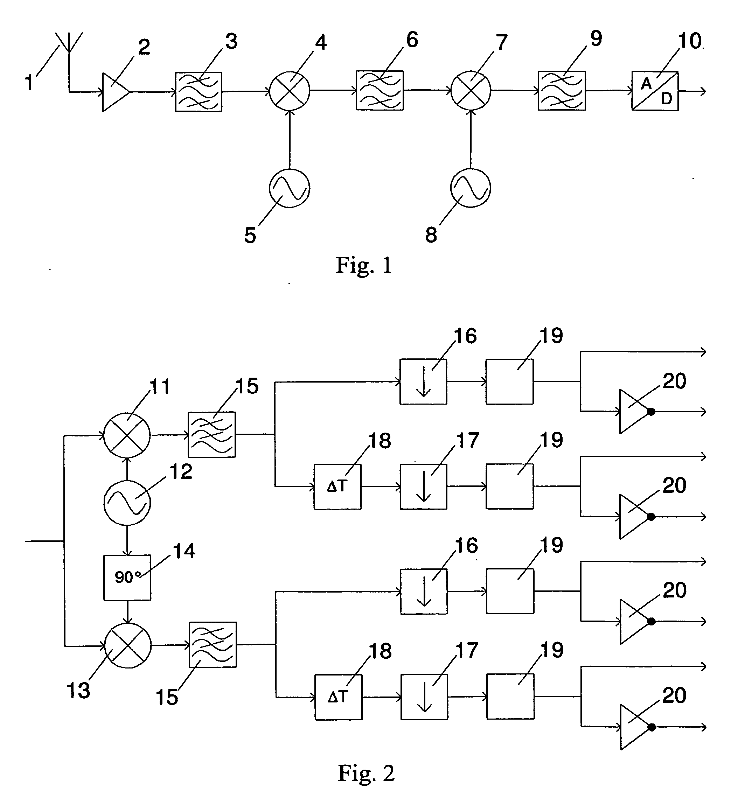

Der in Fig. 1-4 dargestellte erfindungsgemäss ausgebildete GPS-Empfänger weist einen Hochfrequenzteil (Fig. 1) auf mit einer Antenne 1 zum Empfang der von den GPS-Satelliten ausgesandten Signale, auf welche ein rauscharmer selbstregulierender Verstärker 2 und ein Bandpassfilter 3 folgen. Darauf folgen eine erste Mischerstufe mit einem Mischer 4, der das verstärkte und gefilterte empfangene Signal mit einem von einem Oszillator 5 erzeugten Sinussignal von 1'391,82 MHz mischt und einem Bandpassfilter 6 sowie eine grundsätzlich gleich aufgebaute zweite Mischerstufe mit einem Mischer 7, der das Signal mit einem von einem Oszillator 8 erzeugten Sinussignal der Frequenz 180.6 MHz mischt und einem Bandpassfilter 9. Auf die beiden Mischerstufen folgt schliesslich ein A/D-Wandler 10.

Im Basisbandteil (Fig. 2) verzweigt sich der Signalpfad in einen I- und einen Q-Pfad mit jeweils einer weiteren Mischstufe. Im I-Pfad liegt ein Mischer 11, in welchem das Signal mit einem von einem Oszillator 12 erzeugten Sinussignal von ca. 3 MHz gemischt wird, während in der zweiten ein weiterer, im übrigen gleicher Mischer 13 liegt, in welchem das gleiche Signal mit dem durch einen Phasenschieber 14 um 90° phasenverschobenen Sinussignal des Oszillators 12 gemischt wird. Auf den Mischer 11 folgt ein Tiefpassfilter 15, hinter dem sich der Pfad wiederum verzweigt, und zwar zu Abtastgliedern 16, 17, zum ersten direkt und zum zweiten über ein Verzögerungsglied 18, das das Signal um ein $\Delta T$ von ca. 0,5μs verzögert. An den Mischer 13 schliesst eine genau gleich aufgebaute Schaltung an. Auf das Abtastglied 16 folgen ein Puffer 19 und eine weitere Verzweigung. Der eine Pfad führt direkt zu einem Ausgang, der andere über einen Invertierer 20. An das Abtastglied 17 schliesst eine genau gleich aufgebaute Schaltung an. Insgesamt weist das Basisbandteil acht Ausgänge auf, von denen jeder mit dem Eingang einer Reihe von eigenen Synchronisationsschaltungen verbunden ist, deren jede einem bestimmten Satelliten zugeordnet ist und auf die von ihm verwendete Grundfolge synchronisiert.

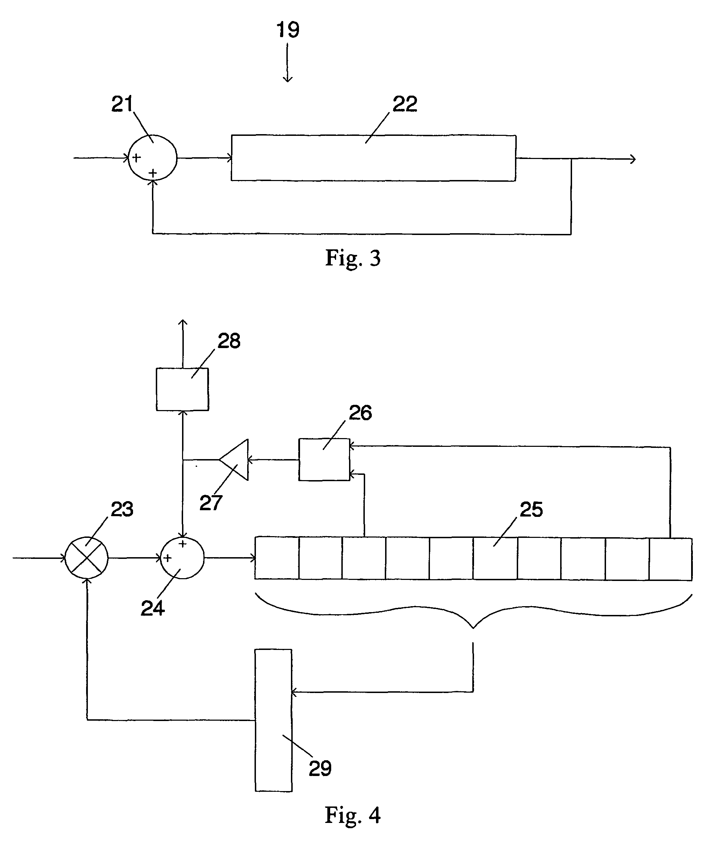

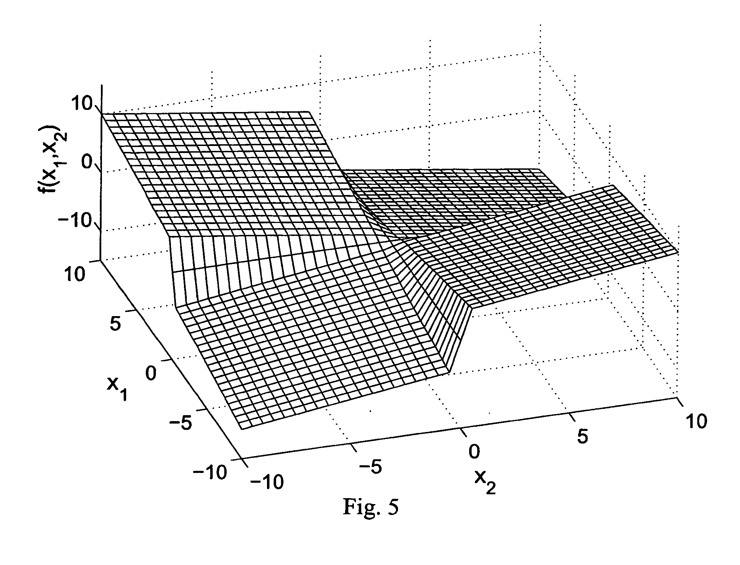

Der Puffer 19 umfasst (Fig. 3) einen Addierer 21 und ein Schieberegister 22 mit 1'023 Speicherplätzen für analoge Werte. Der Ausgang des Schieberegisters 22 ist auf den zweiten Eingang des Addierers 21 zurückgeführt. Jede Synchronisationsschaltung (Fig. 4) umfasst ein auf den Eingang folgendes Verknüpfungsglied 23, auf welches ein Addierer 24 folgt und weiter ein analoges rückgekoppeltes Schieberegister 25 mit zehn Speicherplätzen. Eine Rückkopplungsschaltung 26 ist mit Abgriffen am zehnten Speicherplatz und einem weiteren oder auch mehreren weiteren Speicherplätzen verbunden. Im Beispiel ist, (5) entsprechend, lediglich ein weiterer Abgriff, am dritten Speicherplatz, vorhanden. In der Rückkopplungsschaltung 26 werden die abgegriffenen analogen Werte gemäss einer Rückkopplungsfunktion verknüpft. Der Graph einer möglichen Rückkopplungsfunktion mit zwei Argumenten $f(x_1,x_2)$ ist in Fig. 5 dargestellt. Der Ausgang der Rückkopplungsschaltung 26 ist über einen Skalierer 27 mit dem zweiten Eingang des Addierers 24 verbunden. Der Addierer 24 bildet so eine Ueberlagerungsschaltung zur Ueberlagerung eines Rückkopplungswertes mit einem vom Verknüpfungsglied 23 kommenden Zwischenwerts.

Der Ausgang des Skalierers 27 ist ausserdem mit einem Diskriminator 28 verbunden, der einen Quadrierer oder eine andere das Eingangssignal in den positiven Bereich abbildende Schaltung, einen Tiefpassfilter und einen Schwellwertdetektor enthält und ein binäres Signal abgibt. Der Diskriminator kann auch an irgendeiner anderen Stelle der vom Schieberegister 25, der Rückkopplungsschaltung 26, dem Skalierer 27 und dem Addierer 24 gebildeten Schleife angeschlossen sein. Weiter ist ein Speicher 29 vorgesehen, dem ein von allen im Schieberegisters 25 gespeicherten Werten abgeleiteter Bestimmungssatz binärer Werte zugeleitet wird und dessen Ausgang mit dem zweiten Eingang der Verknüpfungsschaltung 23 verbunden ist.

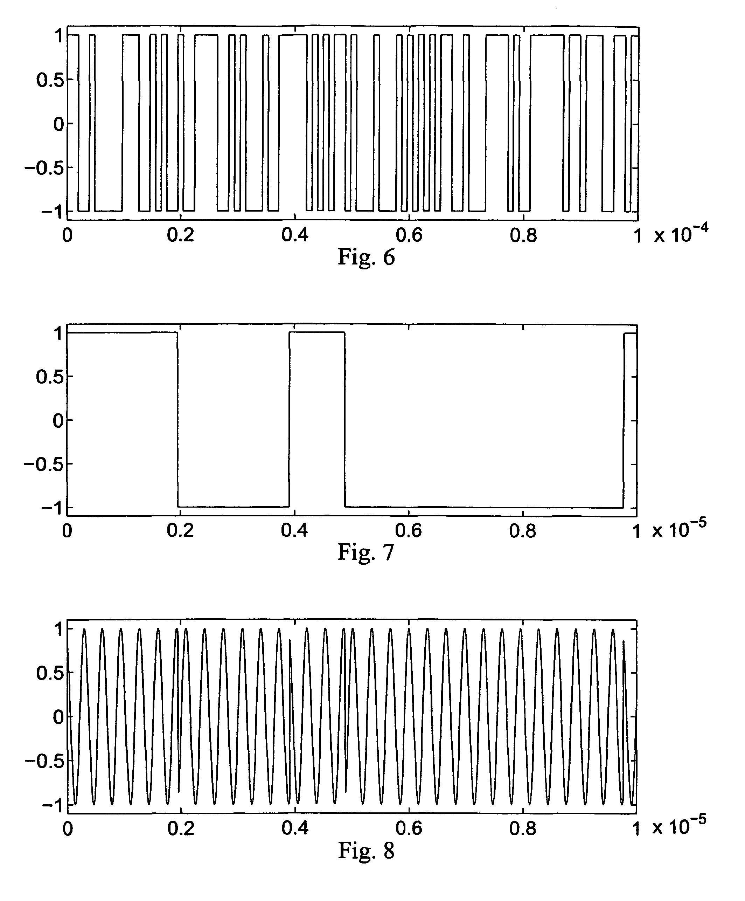

In Fig. 6 ist ein 100μs dauernder Ausschnitt aus der Grundfolge des GPS-Satelliten mit der Nummer 1 dargestellt. Diese Grundfolge ist eine Gold-Folge, die aus einer ersten erzeugenden m-Folge $p_1,...,p_{1'023}$, die durch die Rückkopplung gemäss (5) definiert ist und einer zweiten erzeugenden m-Folge $q_1,...,q_{1'023}$ erzeugbar ist. Fig. 7 zeigt die ersten 10μs des Ausschnitts von Fig. 6. Die Grundfolge wird im Satelliten in einem Trägersignal mit einer Frequenz von 1'575,42 MHz codiert, derart, dass jeder Wechsel des binären Wertes in derselben durch einen Phasensprung um 180° im Trägersignal repräsentiert wird.

Von den von der Antenne 1 aufgefangenen, vom Verstärker 2 verstärkten Signalen gelangen durch den Bandpassfilter 3 im wesentlichen die von den im Empfangsbereich befindlichen GPS-Satelliten stammenden Signale in die anschliessenden Mischerstufen, wo die Trägerfrequenz auf eine Zwischenfrequenz von 3 MHz heruntertransformiert wird. Das so vorbereitete Signal, das dem in Fig. 7 gezeigten Ausschnitt entspricht, ist in Fig. 8 dargestellt. Das Signal wird im A/D-Wandler 10 mit einer bestimmten Bitbreite, z.B. 12 Bit für den Betrag und einem zusätzlichen Bit für das Vorzeichen digitalisiert. Die Werte können dabei als Gleitkommazahlen oder als ganze Zahlen dargestellt werden. Sie werden jedoch im weiteren zur Unterscheidung von binären Werten als analoge Werte bezeichnet. In den Figuren sind unverrauschte Signale dargestellt, während tatsächlich die in der Antenne sehr schwachen Signale stark verrauscht sind mit einem typischen Signal-Rausch-Abstand von ca. -35dB.

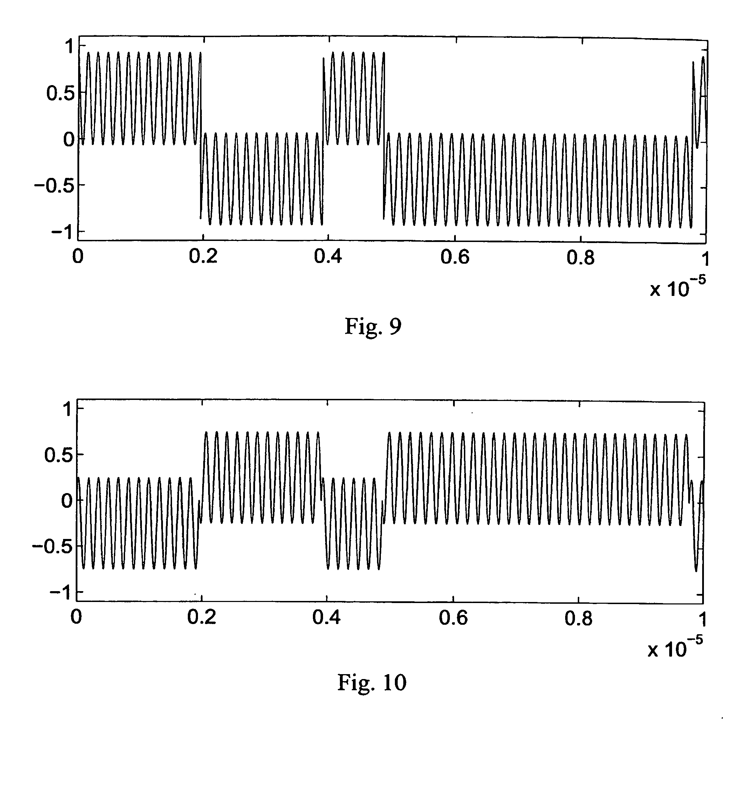

In den Mischern 11 und 12 werden nun durch Mischung mit Sinussignalen von ca. 3 MHz die in Fig. 9 und 10 dargestellten Signale erzeugt. Das erste stammt aus dem I-Pfad, d.h. einer Mischung des Signals mit dem vom Oszillator 12 erzeugten Sinussignal im Mischer 11 und das zweite aus dem Q-Pfad, d.h. von einer Mischung mit dem um 90° phasenverschobenen Sinussignal im Mischer 13. Das Ergebnis ist eine Ueberlagerung des die Grundfolge codierenden Signals mit einem Sinussignal, dessen Frequenz der Summe der Frequenzen, also ca. 6 MHz entspricht. Die Verdoppelung der Pfade ist erforderlich, weil im I-Pfad bei einer Phasenverschiebung des Sinussignals gegenüber dem vom A/D-Wandler 10 stammenden Signal um $\pm90°$ der die Grundfolge codierende Anteil desselben ausgelöscht würde. Im vorliegenden Fall ist, da die Phasenverschiebung lediglich 30° beträgt, der entsprechende Anteil im I-Pfad deutlicher ausgeprägt.

Die Frequenz des Oszillators 12 ist steuerbar. Da je nach dem momentanen Bewegungszustand eines Satelliten die Trägerfrequenz jeweils um einige kHz Doppler-verschoben sein kann, muss ein entsprechender Frequenzbereich z.B. schrittweise überstrichen werden. Zu diesem Zweck kann dann die Frequenz des Oszillators 12 gezielt variiert werden.

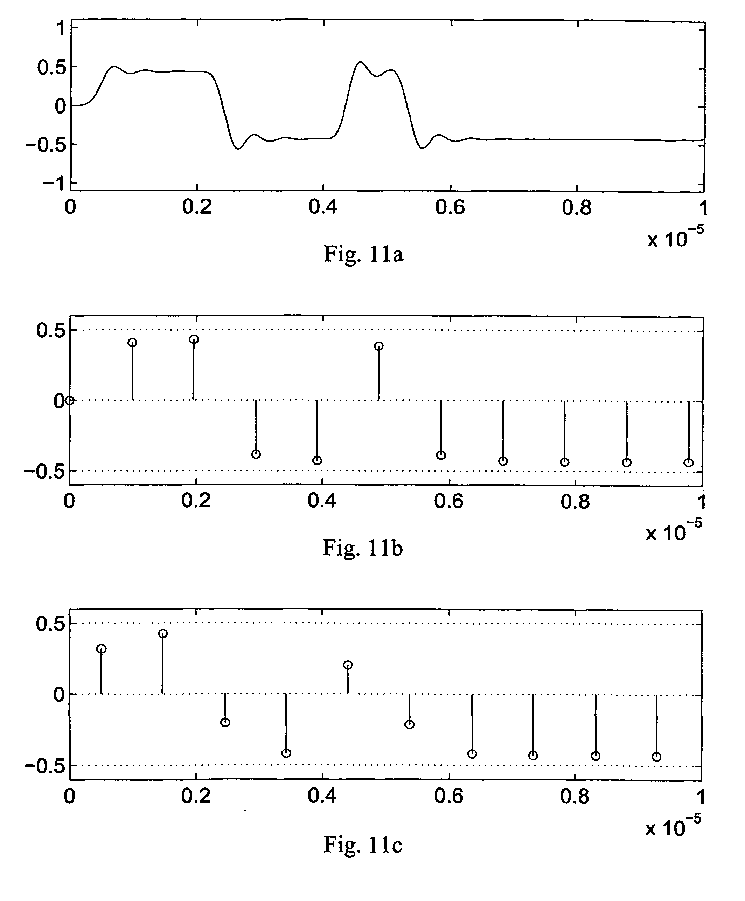

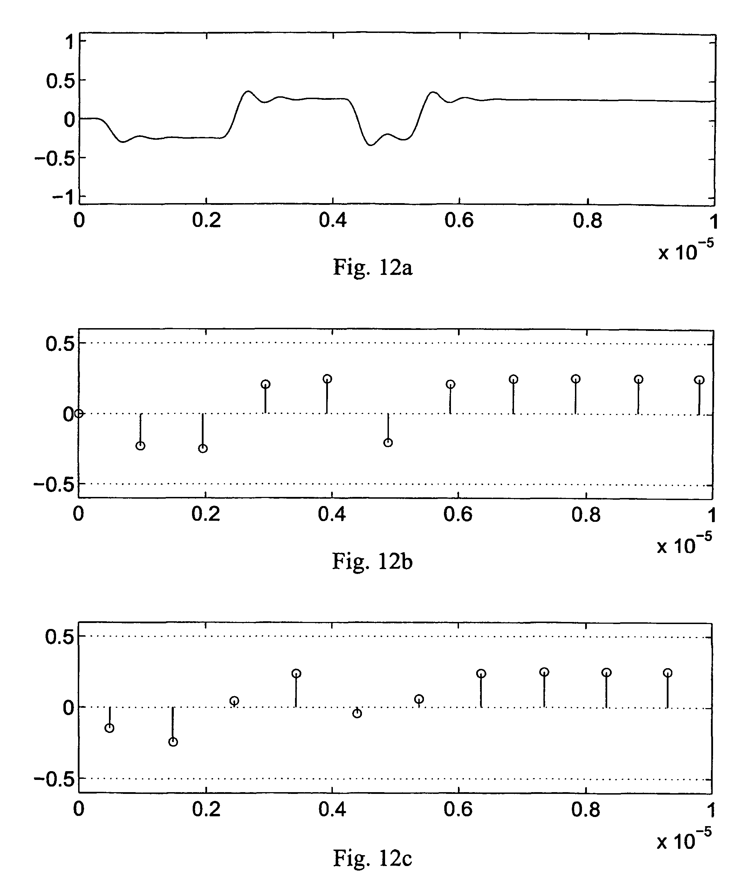

Das Signal wird nun im I- wie im Q-Pfad jeweils über einen Tiefpassfilter 15, der die hochfrequenten Anteile ausfiltert, direkt dem Abtastglied 16 zugeleitet und über das Verzögerungsglied 18 dem Abtastglied 17. Durch die Verzögerung des Signals um ein $\Delta T$ von ca. 0,5µs, was einer halben Chiplänge entspricht, im Verzögerungsglied 18 wird sichergestellt, dass mindestens eine Abtastung bei wohldefiniertem Signal erfolgt. In Fig. 11a ist das Signal des 1-Pfads nach dem Tiefpassfilter 15, also vor der Abtastung dargestellt, in Fig. 11b die Folge der analogen Werte, die das Abtastglied 16 daraus erzeugt und in Fig. 11c die analogen Werte am Ausgang des Abtastglieds 17. In Fig. 12a-c sind die entsprechenden Signale des Q-Pfads dargestellt. Offensichtlich spiegelt im Beispiel das Ausgangssignal des Abtastglieds 16 die ursprüngliche Folge von Fig. 7 am deutlichsten wider. Zur Erleichterung des Verständnisses ist jeweils nur ein Ausschnitt des vom Satelliten Nr. 1 gesendeten Signals in den verschiedenen Stufen der Verarbeitung dargestellt. Tatsächlich wird jedoch in diesem Bereich des Empfängers jeweils eine Ueberlagerung aller empfangenen Signale verarbeitet.

Die entsprechenden analogen Werte gelangen nun in den Puffer 19. Dort werden mehrere, z.B. zwanzig Exemplare hintereinander ermittelter Folgen von jeweils 1'023 Werten, die jeweils einer verrauschten Grundfolge entsprechen, welche ja zur Uebermittlung eines Datenbits jeweils zwanzig Mal hintereinander gesendet werden, überlagert, d.h. es werden in den Speicherplätzen des Schieberegisters 22 die 1'023 den Chips der Grundfolge entsprechenden analogen Werte des ersten Exemplars abgelegt und dann sequentiell an den Addierer 21 zurückgeliefert und die entsprechenden Werte des zweiten Exemplars dazuaddiert und der ursprüngliche Wert mit dem Resultat überschrieben. Dies wird so lange wiederholt, bis die Summe der zwanzig Exemplare im Schieberegister 22 abgelegt ist.

Da sich bei der Summation das Rauschen lediglich unkorreliert überlagert, kann dadurch eine wesentliche Verbesserung des Rauschabstands erzielt werden. Falls allerdings während der Summation das Datenbit wechselt und die entsprechende Grundfolge invertiert wird, kann die Summation auch zur teilweisen Auslöschung führen. In diesem Fall wird jedoch innerhalb einer bestimmten Zeitspanne bezüglich dieser Grundfolge keine Synchronisation zu Stande kommen, was dann zu einem Abbruch und einer Füllung des Schieberegisters 22 mit neuen Daten führt, wie weiter unten noch erläutert werden wird.

Die im Puffer 19 gespeicherte Basisfolge wird nun zur Erzeugung einer externen Folge wiederholt ausgelesen und jeweils an die Eingänge von zwei Synchronisationsschaltungen (Fig. 4) geleitet, und zwar an den einen direkt und an den anderen, da die Grundfolge durch Verknüpfung mit dem Datenbit invertiert sein kann, über einen Invertierer 20.

Die verschiedenen in den vier Puffern 19 gespeicherten Basisfolgen von aus dem empfangenen Signal abgeleiteten analogen Werten $a_1,...,a_{1'023}$ werden nun, jeweils direkt und invertiert, als externe Folge wiederholt den nachgeschalteten acht Exemplaren der Synchronisationsschaltung gemäss Fig. 4, welche auf die Grundfolge des Satelliten Nr. 1 synchronisieren, zugeleitet. Ein Exemplar, welches eine günstige Folge erhält, d.h. eine, welche einen der codierten Grundfolge $s_1,...,s_{1'023}$ möglichst ähnlichen Anteil enthält, sollte nun daraus eine der Grundfolge $s_1,...,s_{1'023}$ des Satelliten Nr. 1 entsprechende interne Folge erzeugen, die zudem hinsichtlich der Phasenlage mit der externen Folge übereinstimmen soll. Für m-Folgen ist dies mit einer Synchronisationsschaltung, in der ein Wert, der durch Rückkopplung aus dem Schieberegister abgeleitet wurde, mit der externen Folge überlagert und das Resultat wieder dem Schieberegister zugeleitet wird, grundsätzlich in zufriedenstellender Weise möglich, nicht jedoch für Gold-Folgen.

In der erfindungsgemässen Synchronisationsschaltung wird daher zuerst durch gliedweise Verknüpfung mit einer weiteren Folge ein Zwischensignal erzeugt, aus welchem dann das Eingangssignal für das Schieberegister 25 gewonnen wird. Im synchronisierten Zustand, in dem die erzeugte interne Folge von analogen Werten bis auf einen Rauschanteil im wesentlichen der externen Folge entspricht, funktioniert die Synchronisationsschaltung wie folgt:

Die externe Folge entspricht Wiederholungen der Basisfolge, welche die verrauschte Grundfolge $s_1,...,s_{1'023}$ enthält, wobei dieselbe gemäss (6) durch gliedweise Verknüpfung der ersten erzeugenden m-Folge $p_1,...,p_{1'023}$ und der zweiten erzeugenden m-Folge $q_1,...,q_{1'023}$ erzeugt wird. Das Schieberegister 25 erzeugt im synchronisierten Zustand die erste erzeugende m-Folge. Der Inhalt des Schieberegisters 25, $a_{i-10},...,a_{i-1}$ entspricht also einem Abschnitt dieser m-Folge, also $p_{i-10},...,p_{i-1}$ für irgend ein i mit $1 \leq i \leq 1'023$. Da es sich um eine m-Folge handelt, ist dieses i eindeutig bestimmbar und damit auch der entsprechende Wert $q_i$ der zweiten erzeugenden Folge. Dieser Wert wird aus dem Speicher 29, der als Tabelle mit 1'023 Speicherplätzen strukturiert ist, ausgelesen, wobei die Vorzeichen-Bits der Werte $p_{i-10},...p_{i-1}$ als Bestimmungssatz benützt werden, der dann als Adresse des Tabellenplatzes von $q_i$ dient.

Das nächste Glied der externen Folge, das, von einem Rauschanteil abgesehen, im wesentlichen $s_i$ entspricht, wird im Verknüpfungsglied 23 mit $q_i$ verknüpft, was gemäss (6) in Verbindung mit (1) im wesentlichen $p_i$ als Zwischenwert ergibt. Dieser Wert wird im Addierer 24 zum im Skalierer 27 skalierten Rückkopplungswert aus der Rückkopplungsschaltung 26 addiert. Dieser letztere Wert entspricht aber ebenfalls im wesentlichen $p_i$, da er ja durch die die erste erzeugende Folge definierende Rückkopplung aus den im wesentlichen $p_{i-10},...,p_{i-1}$, entsprechenden Werten $a_{i-10},...,a_{i-1}$, im konkreten Fall durch Verknüpfung von $a_{i-10}$ mit $a_{i-3}$, erzeugt wurde. Die Ueberlagerung des Rückkopplungswertes mit dem Zwischenwert entspricht also $a_i$ und wird als neuer Eingangswert in das Schieberegister 25 eingespeist. Das System ist offensichtlich konsistent. Die im analogen rückgekoppelten Schieberegister 25 erzeugte Folge der $a_i$ entspricht im wesentlichen Wiederholungen der ersten erzeugenden m-Folge $p_1,..., p_{1'023}$. Durch gliedweise Verknüpfung mit der zweiten erzeugenden m-Folge $q_1,...,q_{1'023}$ kann daraus eine Wiederholungen der Grundfolge $s_1,...,s_{1'023}$ entsprechende interne Folge erzeugt werden.

Für die Stabilität und das Synchronisationsverhalten bei den in GPS-Empfängern herrschenden grossen negativen Rauschabständen ist die Wahl einer geeigneten Rückkopplungsfunktion f von beträchtlicher Bedeutung. Mit den bisher bekannten Funktionen konnte bei stark verrauschten Folgen keine Synchronisation erzielt werden. Bei der Suche nach geeigneteren Rückkopplungsfunktionen haben sich verschiedene Merkmale als günstig herausgestellt. So sollte sie bei der gewählten Darstellung der binären Werte - bei anderen Darstellungen müssen die Eigenschaften z.T. entsprechend transformiert werden - möglichst folgende Eigenschaften haben:

Wenn die Beträge der Argumente 1 sind, sollte der Betrag des Rückkopplungswertes etwas kleiner als 1 sein, vorzugsweise zwischen 0,90 und 0,99. Es ist günstig, wenn die Rückkopplungsfunktion bei Argumenten des Betrages 1 einen Wert vom Betrag 1 liefert, d.h.

$$(7) \qquad |f(x_1,...,x_m)| = 1 \text{ für } |x_1| = ... = |x_m| = 1,$$

gilt und der Funktionswert dann mit einem wählbaren Faktor $k<1$, insbesondere $0,90<k<0,99$ multipliziert wird. Diese Multiplikation wird durch den einstellbaren Skalierer 27 ausgeführt, welcher der die Rückkopplungsfunktion auswertenden Rückkopplungsschaltung 26 nachgeschaltet ist.

Das Vorzeichen der Rückkopplungsfunktion sollte jeweils dem Vorzeichen des Produkts der negativen Argumente entgegengesetzt sein, also

$$(8) \qquad \text{sig}(f(x_1,...,x_m)) = -\text{sig}((-x_1)\cdot...\cdot(-x_m)).$$

Falls $x_1,...,x_m$ jeweils den Betrag 1 haben, also auch als binäre Grössen angesehen werden können, führen die genannten beiden Eigenschaften dazu, dass $f(x_1,...,x_m)$ der Verknüpfung $x_1\otimes...\otimes x_m$ entspricht.

Weiter ist es von Vorteil, wenn die Rückkopplungsfunktion f invariant unter Vertauschung der Argumente ist. Als Funktion jedes einzelnen Arguments, also bei Konstanthaltung der übrigen, sollte sie antisymmetrisch und monoton sein.

Als besonders günstig hat es sich erwiesen, wenn die Rückkopplungsfunktion in jedem Sektor, der durch bestimmte Werte der Vorzeichen der Argumente definiert ist, im wesentlichen eine Linearkombination der Argumente ist. Die sich daraus ergebenden Unstetigkeiten an den Sektorgrenzen können verstetigt oder geglättet werden, doch hat es sich gezeigt, dass Abweichungen das Verhalten eher verschlechtern und daher nicht gross sein sollten. Eine Rückkopplungsfunktion f, die alle die obengenannten Eigenschaften hat und mit der selbst bei stark verrauschten Signalen Synchronisation erzielt werden konnte, ist

$$(9) \qquad f(x_1,...,x_m) = -\text{sig}((-x_1)\cdot...\cdot(-x_m))\cdot(|x_1|+...+|x_m|)/m$$

Diese Funktion ist, bis auf eine Skalierung, die sicherstellt, dass (7) erfüllt ist, in jedem Sektor eine Linearkombination der Argumente mit Koeffizienten von +1 oder -1.

Für zwei Variable, d.h.

$$(10) \qquad f(x_1,x_2) = -\text{sig}(x_1\cdot x_2)\cdot(|x_1|+|x_2|)/2,$$

ist sie in Fig. 5 dargestellt, wobei lediglich die Uebergänge an den Sektorgrenzen durch lineare Interpolation verstetigt wurden.

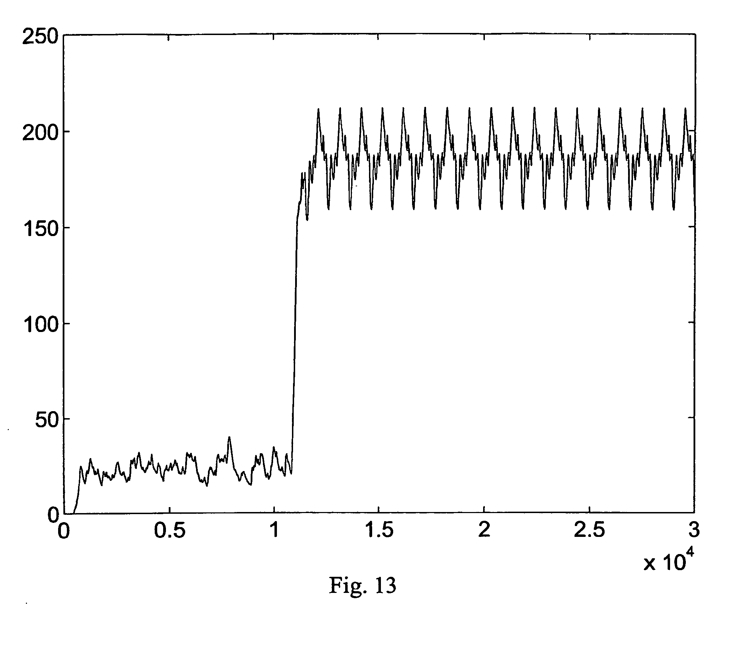

Da die Synchronisationsschaltung mit gespeicherten Daten arbeitet, ist ihre Arbeitsgeschwindigkeit von der Chip-Rate des empfangenen Signals unabhängig und kann wesentlich höher sein. Als Kriterium für eine erfolgreiche Synchronisation dient die Leistung der erzeugten internen Folge, welche am Ausgang des Skalierers 27 abgenommen wird. Während vor einer Synchronisation die Glieder der internen Folge etwa den gleichen Wert haben wie die der externen Folge, wird die letztere bei erfolgter Synchronisation mit einem Faktor 1/(1-k), der also gewöhnlich zwischen 10 und 100 liegt, verstärkt. Die Leistung der internen Folge $(a_i)_{i=1,...,1'023}$ steigt demgemäss stark an, wie in Fig. 13 dargestellt. Dieser Anstieg wird vom Diskriminator 28, in dem die Leistung durch Quadrieren ermittelt und Filterung durch einen Tiefpassfilter geglättet und über einen längeren Zeitabschnitt gemittelt und schliesslich das Resultat mit einem Schwellwert verglichen wird, registriert. Er gibt ein entsprechendes binäres Signal ab, das die erfolgte Synchronisation anzeigt.

Tritt nach einer bestimmten Zeit keine Synchronisation ein, so hat es meist keinen Sinn, das Verfahren mit den gleichen Daten fortzusetzen. Das Ausbleiben der Synchronisation kann zufällig sein, z.B. an einer besonders ungünstigen Form des Rauschanteils liegen, an einer ungünstigen Phasenlage des empfangenen Signals oder auch an einem ungünstigen Abtastzeitpunkt vor einem Datenbitwechsel, der dazu führt, dass in den Puffern 19 (Fig. 2) Exemplare von Folgen addiert werden, in welchen der die gesuchte Grundfolge enthaltende Anteil mit unterschiedlichen Vorzeichen auftritt, was zu einer gravierenden Schwächung des besagten Anteils gegenüber dem Rauschanteil führen kann. In solchen Fällen ist es sinnvoll, die Puffer 19 mit neuen Basisfolgen zu füllen und mit ihnen den Synchronisationsprozess neu zu beginnen.

Im Rahmen des GPS-Systems stehen jeweils bis zu 32 Satelliten im Einsatz, deren Grundfolgen sich unterscheiden. Da mit den Signalen aller jeweils im Empfangsbereich liegenden Satelliten gearbeitet werden sollte, soll der Empfänger jeweils allen im Einsatz stehenden Satelliten entsprechende Typen von Synchronisationsschaltungen enthalten, wobei jeder Typus auf die Grundfolge eines der Satelliten synchronisiert. Die Typen unterscheiden sich jeweils durch den Inhalt des Speichers, welcher die zweite erzeugende m-Folge $q_1,...,q_{1'023}$ bestimmt. Die Verzweigung zu den verschiedenen Typen kann statt am Ende des Basisbandteils, wo an jedem Ausgang 32 verschiedene Synchronisationsschaltungen angeschlossen sein können, auch weiter vorne im Signalpfad liegen, z.B. am Ende des Hochfrequenzteils. Dies hat den Vorteil, dass etwa die Frequenz des Oszillators 12 unter Ausnutzung weiterer Informationen gezielter auf die Bahn des jeweiligen Satelliten eingestellt werden kann. Andererseits ist natürlich eine Vervielfachung des ganzen Basisbandteils erforderlich.

Das geschilderte Ausführungsbeispiel kann natürlich auf viele Arten abgewandelt werden. So können etwa andere als die erwähnten Zwischenfrequenzen gewählt werden oder die Zwischenstufen ganz oder zum Teil entfallen. Für die Implementierung der Synchronisationsschaltung und des Empfängers stehen auch verschiedene Möglichkeiten offen, insbesondere können unterschiedliche Grade der Integration gewählt werden. Die Schieberegister können z.B. jeweils von einem entsprechenden Speicher mit linearer Addressierung und einem Schreib- und einem Lesezeiger gebildet werden.

**Bezugszeichenliste**

1    Antenne
2    Verstärker
3    Bandpassfilter
4    Mischer
5    Oszillator
6    Bandpassfilter
7    Mischer
8    Oszillator
9    Bandpassfilter
10    A/D-Wandler
11    Mischer
12    Oszillator
13    Mischer
14    Phasenschieber
15    Tiefpassfilter
16    Abtastglied
17    Abtastglied
18    Verzögerungsglied
19    Puffer
20    Invertierer

21 Addierer
22 Schieberegister
23 Verknüpfungsglied
24 Addierer
25 Schieberegister
26 Rückkopplungsschaltung
27 Skalierer
28 Diskriminator
29 Speicher

**Patentansprüche**

1. Verfahren zur Erzeugung einer internen Folge von analogen Werten mit einer bestimmten Periode, welche einer in einem empfangenen Signal codierten externen Folge entspricht und mit ihr synchron ist, wobei die externe Folge Wiederholungen einer Grundfolge $(s_1,...,s_N)$ der Länge N umfasst, welche im wesentlichen einer Folge von binären Werten entspricht, die durch Verknüpfung einer ersten erzeugenden Binärfolge $(p_1,...,p_N)$ der Länge N mit einer nicht konstanten zweiten erzeugenden Binärfolge $(q_1,...,q_N)$ der Länge N herstellbar ist und wobei die erste erzeugende Binärfolge $(p_1,...,p_N)$ durch ein binäres rückgekoppeltes Schieberegister der Länge n, in welchem ein nächster Wert $(p_i)$ jeweils durch binäre Verknüpfung des ältesten Wertes $(p_{i-n})$ mit mindestens einem der auf diesen folgenden Werte $(p_{i-n+1},...,p_{i-1})$ gemäss einem festen Rückkopplungsmuster hergestellt wird, erzeugbar ist und in der kein Abschnitt der Länge n öfter als ein Mal auftritt, so dass gegebenenfalls die Position eines derartigen Abschnitts innerhalb der Grundfolge $(s_1,...,s_N)$ eindeutig bestimmt ist, **dadurch gekennzeichnet, dass** dem Eingang eines analogen rückgekoppelten Schieberegisters der Länge n mit einem demjenigen des besagten binären rückgekoppelten Schieberegisters entsprechenden Rückkopplungsmuster jeweils ein neuer Eingangswert $(a_i)$ zugeführt wird, welcher durch Ueberlagerung eines aus den Werten $(a_{i-n},...,a_{i-1})$ im analogen rückgekoppelten Schieberegister gemäss einer Rückkopplungsfunktion abgeleiteten analogen Rückkopplungswerts mit einem Zwischenwert hergestellt wird, der gegebenenfalls durch Verknüpfung des aktuellen Wertes der externen Folge mit einem aktuellen Wert $(q_i)$ der zweiten erzeugenden Folge $(q_1,...,q_N)$ hergestellt wurde, dessen Position (i) in derselben auf die Position eines Abschnitts in der ersten erzeugenden Folge $(p_1,...,p_N)$ folgt, welcher aus einem Bestimmungssatz von n binären Werten besteht, die aus den analogen Werten $(a_{i-n},...,a_{i-1})$ im analogen rückgekoppelten Schieberegister abgeleitet wurden.

2. Verfahren nach Anspruch 1, **dadurch gekennzeichnet, dass** die erste erzeugende Folge $(p_1,...,p_N)$ eine m-Folge der Länge $N=2^n-1$ ist, derart, dass jeder Satz von n binären Werten ausser einem genau ein Mal als Abschnitt der Länge n in derselben vorkommt.

3. Verfahren nach Anspruch 2, **dadurch gekennzeichnet, dass** es sich bei der Grundfolge um eine Gold-Folge handelt.

4. Verfahren nach einem der Ansprüche 1 bis 3, **dadurch gekennzeichnet, dass** der aktuelle Wert $(q_i)$ der zweiten erzeugenden Binärfolge $(q_1,...,q_N)$ jeweils mit dem Bestimmungssatz als Adresse aus einer Tabelle ausgelesen wird.

5. Verfahren nach einem der Ansprüche 1 bis 4, **dadurch gekennzeichnet, dass** die binären Folgen jeweils aus den Werten +1 und -1 bestehen und die Verknüpfung bis auf einen allfälligen Vorzeichenwechsel die Multiplikation ist.

6. Verfahren nach Anspruch 5, **dadurch gekennzeichnet, dass** der Betrag der Rückkopplungsfunktion 1 ist, wenn die Beträge der Argumente jeweils 1 sind.

7. Verfahren nach Anspruch 5 oder 6, **dadurch gekennzeichnet, dass** das Vorzeichen der Rückkopplungsfunktion stets dem Vorzeichen der Verknüpfung der Argumente entspricht.

8. Verfahren nach einem der Ansprüche 5 bis 7, **dadurch gekennzeichnet, dass** die Rückkopplungsfunktion invariant unter Vertauschung der Argumente ist.

9. Verfahren nach einem der Ansprüche 5 bis 8, **dadurch gekennzeichnet, dass** die Rückkopplungsfunktion als Funktion eines jeden Argumentes antisymmetrisch und monoton ist.

10. Verfahren nach einem der Ansprüche 5 bis 9, **dadurch gekennzeichnet, dass** die Rückkopplungsfunktion im wesentlichen innerhalb eines jeden durch bestimmte Werte der Vorzeichen der Argumente **gekennzeichneten** Sektors im wesentlichen eine Linearkombination der Argumente ist.

11. Verfahren nach Anspruch 10, **dadurch gekennzeichnet, dass** der Betrag der Rückkopplungsfunktion im wesentlichen dem Mittelwert der Beträge der Argumente entspricht.

12. Verfahren nach einem der Ansprüche 6 bis 11, **dadurch gekennzeichnet, dass** der Rückkopplungswert durch Multiplikation des Wertes der Rückkopplungsfunktion mit einem Faktor k<1, der vorzugsweise zwischen 0,90 und 0,99 liegt, hergestellt wird.

13. Verfahren nach einem der Ansprüche 5 bis 12, **dadurch gekennzeichnet, dass** der Bestimmungssatz aus den binären Werten besteht, welche jeweils das gleiche Vorzeichen haben wie der entsprechende analoge Wert ($a_{i-n}$;...; $a_{i-1}$) im Schieberegister.

14. Verfahren nach einem der Ansprüche 1 bis 13, **dadurch gekennzeichnet, dass** die externe Folge mehrere zeitlich unmittelbar aufeinanderfolgende Kopien einer aus dem empfangenen Signal abgeleiteten Basisfolge umfasst, deren Länge der Länge N der Grundfolge entspricht.

15. Verfahren nach Anspruch 14, **dadurch gekennzeichnet, dass** die Basisfolge erzeugt wird, indem die Werte mehrerer in zeitlicher Aufeinanderfolge vom empfangenen Signal abgeleiteter Folgen der Länge N aufaddiert werden.

16. Verfahren nach einem der Ansprüche 1 bis 15, **dadurch gekennzeichnet, dass** ein erfolgte Synchronisation anzeigendes binäres Ausgangssignal erzeugt wird, wenn die Beträge der Werte ($a_i$) der internen Folge einen Schwellwert überschreiten.

17. Synchronisationsschaltung zur Durchführung des Verfahrens nach einem der Ansprüche 1 bis 16, mit einem Eingang zur Aufnahme einer von einem empfangenen Signal abgeleiteten externen Folge von analogen Werten und einem analogen rückgekoppelten Schieberegister (25), einer nach einem bestimmten Rückkopplungsmuster mit Abgriffen desselben verbundenen Rückkopplungsschaltung (26) zur Auswertung einer Rückkopplungsfunktion für die Bestimmung eines Rückkopplungswertes und einer Ueberlagerungsschaltung zur Ueberlagerung des Rückkopplungswertes mit einem Zwischenwert, **dadurch gekennzeichnet, dass** sie ausserdem einen Speicher (29) umfasst, aus dem jeweils gemäss einer Tabelle mit einer von den im analogen rückgekoppelten Schieberegister (25) gespeicherten Werten abgeleiteten Bestimmungssatz als Adresse ein Wert auslesbar ist, sowie ein Verknüpfungsglied (23) zur Herstellung des Zwischenwerts durch Verknüpfung des ausgelesenen Wertes mit dem am Eingang anliegenden Wert.

18. Synchronisationsschaltung nach Anspruch 17, **dadurch gekennzeichnet, dass** der Rückkopplungsschaltung (26) ein Skalierer (27) zur Herstellung des Rückkopplungswertes aus ihrem Ausgangswert nachgeschaltet ist und die Ueberlagerungsschaltung als Addierer (24) zur Addition des Rückkopplungswertes zum Zwischenwert ausgebildet ist.

19. Synchronisationsschaltung nach Anspruch 17 oder 18, **dadurch gekennzeichnet, dass** sie einen Diskriminator (28) zur Erzeugung eines erfolgte Synchronisation anzeigenden binären Ausgangssignals umfasst, dessen Eingang mit dem Ausgang der Rückkopplungsschaltung (26) verbunden ist und der vorzugsweise einen Quadrierer, einen Tiefpassfilter und einen Schwellwertdetektor umfasst.

20. Empfänger zum Empfang eines Signals, welcher mindestens eine Synchronisationsschaltung nach einem der Ansprüche 17 bis 19 zur Ableitung einer internen Folge aus dem empfangenen Signal umfasst.

21. Empfänger nach Anspruch 20, **dadurch gekennzeichnet, dass** er mindestens ein Paar von gleichen Synchronisationsschaltungen umfasst, von denen die eine über einen Invertierer (20) und die andere direkt mit einem gemeinsamen Eingang verbunden sind.

22. Empfänger nach Anspruch 20 oder 21, **dadurch gekennzeichnet, dass** er mindestens ein Paar von gleichen Synchronisationsschaltungen umfasst, welche jeweils über ein Abtastglied (16; 17) mit einem gemeinsamen Eingang verbunden sind, wobei mindestens einem Abtastglied (17) ein Verzögerungsglied (18) vorgeschaltet ist, welches die abgetasteten Werte jeweils um einen Teil einer Chiplänge verschiebt.

23. Empfänger nach einem der Ansprüche 20 bis 22, **dadurch gekennzeichnet, dass** er einen Oszillator (12) zur Erzeugung eines ersten sinusförmigen Signals und eines gegenüber demselben um 90° phasenverschobenen zweiten sinusförmigen Signals umfasst sowie mindestens ein Paar von gleichen Synchronisationsschaltungen, jeweils mit einem vorgeschalteten Mischer (11; 13) zur Mischung des empfangenen Signals mit dem ersten sinusförmiges Signal bzw. dem zweiten sinusförmigen Signal.

**Claims**

1. Method for generating an internal sequence of analogue values having a specific period, which corresponds to an external sequence coded in a received signal and is synchronous with it, the external sequence comprising repetitions of a fundamental sequence $(s_1,...,s_N)$ of length N, which substantially corresponds to a sequence of binary values which can be produced by logical combination of a first generating binary sequence $(p_1,...,p_N)$ of length N with a non-constant second generating binary sequence $(q_1,...,q_N)$ of length N, and the first generating binary sequence $(p_1,...,p_N)$ being capable of being generated by a binary feedback shift register of length n, in which a next value $(p_i)$ is produced in each case by binary logical combination of the oldest value $(p_{i-n})$ with at least one of the values $(p_{i-n+1},...,p_{i-1})$ following it, according to a fixed feedback pattern, and in which no segment of the length n occurs more often than once, so that the position of such a segment is uniquely determined within the fundamental sequence $(s_1,...,s_N)$, **characterized in that** in each case a new input value $(a_i)$ is fed to the input of an analogue feedback shift register of length n with a feedback pattern corresponding to that of said binary feedback shift register, which input value is produced by superposition of an analogue feedback value derived from the values $(a_{i-n},...,a_{i-1})$ in the analogue feedback shift register according to a feedback function with an intermediate value which was produced by a logical combination of the actual value of the external sequence with an actual value $(q_i)$ of the second generating sequence $(q_1,...,q_N)$, the position (i) of which actual value therein follows the position of a segment in the first generating sequence $(p_1,...,p_N)$, which segment consists of a determinative set of n binary values which were derived from the analogue values $(a_{i-n},...,a_{i-1})$ in the analogue feedback shift register.

2. Method according to Claim 1, **characterized in that** the first generating sequence $(p_1,...,p_N)$ is an m-sequence of length $N = 2^n-1$, so that each set of n binary values, except for one, occurs exactly once as a segment of length n therein.

3. Method according to Claim 2, **characterized in that** the fundamental sequence is a Gold sequence.

4. Method according to any of Claims 1 to 3, **characterized in that** the actual value $(q_i)$ of the second generating binary sequence $(q_1,...,q_N)$ is in each case read out from a table with the determinative set being used as address.

5. Method according to any of Claims 1 to 4, **characterized in that** the binary sequences each consist of the values +1 and -1 and, apart from possible change of sign, the logical combination is multiplication.

6. Method according to Claim 5, **characterized in that** the magnitude of the feedback function is 1 if the magnitudes of the arguments are each 1.

7. Method according to Claim 5 or 6, **characterized in that** the sign of the feedback function always corresponds to the sign of the combination of the arguments.

8. Method according to any of Claims 5 to 7, **characterized in that** the feedback function is invariant on interchange of the arguments.

9. Method according to any of Claims 5 to 8, **characterized in that** the feedback function is antisymmetric and monotonic as a function of each argument.

10. Method according to any of Claims 5 to 9, **characterized in that** the feedback function is substantially a linear combination of the arguments within substantially each sector **characterized by** specific values of the signs of the arguments.

**11.** Method according to Claim 10, **characterized in that** the magnitude of the feedback function substantially corresponds to the mean value of the magnitudes of the arguments.

**12.** Method according to any of Claims 6 to 11, **characterized in that** the feedback value is produced by multiplication of the value of the feedback function with a factor k<1, which is preferably between 0.90 and 0.99.

**13.** Method according to any of Claims 5 to 12, **characterized in that** the determinative set consists of the binary values which in each case have the same sign as the corresponding analogue value ($a_{i-n};...;a_{i-1}$) in the shift register.

**14.** Method according to any of Claims 1 to 13, **characterized in that** the external sequence corresponds to a plurality of copies, directly in succession with respect to time, of a basic sequence which is derived from the received signal, the length of which copies corresponds to the length N of the fundamental sequence.

**15.** Method according to Claim 14, **characterized in that** the basic sequence is generated by adding the values of a plurality of sequences of length N which are derived successively from the received signal.

**16.** Method according to any of Claims 1 to 15, **characterized in that** a binary output signal indicating complete synchronization is generated if the magnitudes of the values ($a_i$) of the internal sequence exceed a threshold value.

**17.** Synchronization circuit for carrying out the method as claimed in any of claims 1 to 16, comprising an input for receiving an external sequence of analogue values which is derived from a received signal and an analogue feedback shift register (25), a feedback circuit (26) connected thereto with taps according to a specific feedback pattern and intended for evaluating a feedback function for determining a feedback value, and a superposition circuit for superposing the feedback value with an intermediate value, **characterized in that** it additionally comprises a memory (29) from which in each case a value can be read out according to a table with a determinative set derived from the values stored in the analogue feedback shift register (25) as address, and a logic element (23) for producing the intermediate value by logical combination of the value read out with the value present at the input.

**18.** Synchronization circuit according to Claim 17, **characterized in that** a gain block (27) for producing the feedback value from its initial value follows the feedback circuit (26), and the superposition circuit is in the form of an adder (24) for adding the feedback value to the intermediate value.

**19.** Synchronization circuit according to Claim 17 or 18, **characterized in that** it comprises a discriminator (28) for generating a binary output signal indicating synchronization, the input of which discriminator is connected to the output of the feedback circuit (26) and which discriminator preferably comprises a squaring circuit, a low-pass filter and a threshold value detector.

**20.** Receiver for receiving a signal, which comprises at least one synchronization circuit according to any of Claims 17 to 19 for deriving an internal sequence from the received signal.

**21.** Receiver according to Claim 20, **characterized in that** it comprises at least one pair of identical synchronization circuits, one of which is connected via an inverter (20) and the other directly to a common input.

**22.** Receiver according to Claim 20 or 21, **characterized in that** it comprises at least one pair of identical synchronization circuits which in each case are connected via a sampling element (16; 17) to a common input, with a delay element (18) which shifts the sampled values in each case by a part of a chip length in front of at least one sampling element (17).

**23.** Receiver according to any of Claims 20 to 22, **characterized in that** it comprises an oscillator (12) for generating a first sinewave signal and a second sinewave signal phase-shifted relative thereto by 90°, and at least one pair of identical synchronization circuits, each with a mixer (11; 13) in front for mixing the received signal with the first sinewave signal or the second sinewave signal.

**Revendications**

**1.** Procédé pour la génération d'une séquence interne de valeurs analogiques avec une période déterminée, laquelle correspond à une séquence externe codée dans un signal reçu et est synchrone avec elle, la séquence externe comprenant des répétitions d'une séquence initiale ($s_1,...,s_N$) de longueur N, laquelle correspond essentiellement à une séquence de valeurs binaires qui est productible par combinaison d'une première séquence binaire génératrice ($p_1,...,p_N$) de longueur N avec une deuxième séquence binaire génératrice non constante ($q_1,...,q_N$) de longueur N et la première séquence binaire génératrice ($p_1,...,p_N$) étant productible par un registre à décalage binaire rebouclé de longueur n, dans lequel une prochaine valeur ($p_i$) est produite respectivement par combinaison binaire de la valeur la plus ancienne ($p_{i-n}$) avec au moins l'une des valeurs qui la suivent ($p_{i-n+1},...,p_{i-1}$), selon un modèle fixe de rétroaction, et dans laquelle aucun segment de longueur n n'apparaît plus d'une fois, de sorte que le cas échéant la position d'un tel segment à l'intérieur de la séquence initiale ($s_1,...,s_N$) est déterminé univoquement, **caractérisé en ce que,** à l'entrée d'un registre à décalage analogique rebouclé de longueur n est amenée, avec un modèle de rétroaction correspondant à celui dudit registre à décalage binaire rebouclé, respectivement une nouvelle valeur d'entrée ($a_i$), laquelle est produite par superposition d'une valeur de rétroaction analogique inférée, selon une fonction de rétroaction, des valeurs ($a_{i-n},...,a_{i-1}$) dans le registre à décalage analogique rebouclé, avec une valeur intermédiaire qui a été le cas échéant produite par combinaison de la valeur actuelle de la séquence externe avec une valeur actuelle ($q_i$) de la deuxième séquence génératrice ($q_1,...,q_N$) dont la position (i) dans celle-ci succède à la position d'un segment dans la première séquence génératrice ($p_1,...,p_N$), qui est composé d'une phrase déterminante de n valeurs binaires qui ont été inférées des valeurs analogiques ($a_{i-n},...a_{i-1}$) dans le registre à décalage analogique rebouclé.

2. Procédé selon la revendication 1, **caractérisé en ce que** la première séquence génératrice ($p_1,...,p_N$) est une séquence maximale de longueur $N = 2^n-1$, de sorte que chaque phrase de n valeurs binaires sauf une apparaît dans celle-ci exactement une fois comme segment de longueur n.

3. Procédé selon la revendication 2, **caractérisé en ce que** la séquence initiale est une séquence Gold.

4. Procédé selon l'une des revendications 1 à 3, **caractérisée en ce que** la valeur actuelle ($q_i$) de la deuxième séquence binaire génératrice ($q_1,...,q_N$) est extraite d'un tableau respectivement avec la phrase déterminante servant d'adresse.

5. Procédé selon l'une des revendications 1 à 4, **caractérisé en ce que** les séquences binaires sont composées respectivement des valeurs +1 et -1 et que la combinaison est la multiplication, à l'exception d'un éventuel changement de signe.

6. Procédé selon la revendication 5, **caractérisé en ce que** le montant de la fonction de rétroaction est 1 si les montants des arguments sont respectivement 1.

7. Procédé selon la revendication 5 ou 6, **caractérisé en ce que** le signe de la fonction de rétroaction correspond toujours au signe de la combinaison des arguments.

8. Procédé selon l'une des revendications 5 à 7, **caractérisé en ce que** la fonction de rétroaction est invariante sous permutation des arguments.

9. Procédé selon l'une des revendications 5 à 8, **caractérisé en ce que** la fonction de rétroaction est antisymétrique et monotone en tant que fonction de chaque argument.

10. Procédé selon l'une des revendications 5 à 9, **caractérisé en ce que** la fonction de rétroaction est, essentiellement à l'intérieur de chaque secteur **caractérisé par** des valeurs déterminées des signes des arguments, essentiellement une combinaison linéaire des arguments.

11. Procédé selon la revendication 10, **caractérisé en ce que** le montant de la fonction de rétroaction correspond essentiellement à la moyenne des montants des arguments.

12. Procédé selon l'une des revendications 6 à 11, **caractérisé en ce que** la valeur de rétroaction est produite par multiplication de la valeur de la fonction de rétroaction par un facteur k<1, lequel se situe de préférence entre 0,90 et 0,99.

13. Procédé selon l'une des revendications 5 à 12, **caractérisé en ce que** la phrase déterminante consiste en des valeurs binaires, lesquelles ont respectivement le même signe que la valeur analogique correspondante ($a_{i-n};...;a_{i-1}$) dans le registre à décalage.

**14.** Procédé selon l'une des revendications 1 à 13, **caractérisé en ce que** la séquence externe comprend plusieurs copies - qui se suivent directement dans le temps - d'une séquence de base inférée du signal reçu et dont la longueur correspond à la longueur N de la séquence initiale.

**15.** Procédé selon la revendication 14, **caractérisé en ce que** la séquence de base est générée par l'addition des valeurs de plusieurs séquences de longueur N inférées du signal reçu et consécutives dans le temps.

**16.** Procédé selon l'une des revendications 1 à 15, **caractérisé en ce qu'**un signal de sortie binaire indiquant la synchronisation effectuée est généré quand les montants des valeurs ($a_i$) de la séquence interne dépassent une valeur seuil.

**17.** Circuit de synchronisation pour l'exécution du procédé selon l'une des revendications 1 à 16, avec une entrée pour la réception d'une séquence externe de valeurs analogiques inférée d'un signal reçu et un registre à décalage analogique rebouclé (25), un circuit de rétroaction (26) relié à des prises dudit registre à décalage selon un modèle de rétroaction déterminé, destiné à exploiter une fonction de rétroaction pour la détermination d'une valeur de rétroaction, et un montage hétérodyne pour la superposition de la valeur de rétroaction avec une valeur intermédiaire, **caractérisé en ce qu'**il comprend en outre une mémoire (29), de laquelle une valeur peut être extraite, respectivement selon un tableau, avec une phrase déterminante servant d'adresse et inférée des valeurs stockées dans le registre à décalage analogique rebouclé (25), ainsi qu'un élément logique (23) pour la production de la valeur intermédiaire par combinaison de la valeur extraite avec la valeur se trouvant à l'entrée.

**18.** Circuit de synchronisation selon la revendication 17, **caractérisé en ce qu'**en aval du circuit de rétroaction (26) est monté un normaliseur (27) pour la production de la valeur de rétroaction issue de sa valeur initiale et que le montage hétérodyne est conçu comme un additionneur (24) pour l'addition de la valeur de rétroaction à la valeur intermédiaire.

**19.** Circuit de synchronisation selon la revendication 17 ou 18, **caractérisé en ce qu'**il comprend un discriminateur (28) pour la génération d'un signal de sortie binaire indiquant la synchronisation effectuée, l'entrée dudit discriminateur étant reliée à la sortie du circuit de rétroaction (26) et ledit discriminateur comprenant de préférence un élévateur au carré, un filtre passe-bas et un détecteur à seuil.

**20.** Récepteur pour la réception d'un signal, ledit récepteur comprenant au moins un circuit de synchronisation selon l'une des revendications 17 à 19 pour inférer du signal reçu une séquence interne.

**21.** Récepteur selon la revendication 20, **caractérisé en ce qu'**il comprend au moins une paire de circuits de synchronisation identiques, dont l'un est relié par un inverseur (20) et l'autre directement à une entrée commune.

**22.** Récepteur selon la revendication 20 ou 21, **caractérisé en ce qu'**il comprend au moins une paire de circuits de synchronisation identiques, lesquels sont reliés respectivement par un échantillonneur (16; 17) à une entrée commune, une ligne à retard (18) étant montée en amont d'au moins un échantillonneur (17), ladite ligne à retard décalant les valeurs échantillonnées respectivement d'une partie d'une longueur de chip.

**23.** Récepteur selon l'une des revendications 20 à 22, **caractérisé en ce qu'**il comprend un oscillateur (12) pour la génération d'un premier signal sinusoïdal et d'un deuxième signal sinusoïdal déphasé de 90° par rapport au premier, ainsi qu'au moins une paire de circuits de synchronisation identiques, avec respectivement un mélangeur monté en amont (11; 13) pour le mélange du signal reçu avec le premier signal sinusoïdal ou le deuxième signal sinusoïdal.

Fig. 1

Fig. 2

Fig. 3

Fig. 4

Fig. 5

Fig. 6

Fig. 7

Fig. 8

Fig. 9

Fig. 10

Fig. 11a

Fig. 11b

Fig. 11c

Fig. 12a

Fig. 12b

Fig. 12c

Fig. 13